# EUROPEAN PATENT APPLICATION

(11) **EP 3 798 605 A1**
(43) Date of publication of application: **31.03.2021**
(21) Application number: 19382831.6
(22) Date of filing: 26.09.2019
(51) Int. Cl.: G01N 1/12, G01N 15/02, G01N 15/14

(54) **OPTOELECTRONIC DEVICE FOR FLUID ANALYSIS AND RELATED METHOD FOR OPTICAL ANALYSIS**

(71) Applicant: Acondicionamiento Tarrasense, 08225 Terrassa (Barcelona) (ES)
(72) Inventor: GOROSPE BALLESTEROS, Jorge, 08225 Terrassa (BARCELONA) (ES); RODRIGUEZ ESPAÑOL, Xavier, 08225 Terrassa (BARCELONA) (ES); GONZALEZ SANCHEZ, Miguel, 08225 Terrassa (BARCELONA) (ES); MARTINEZ GARCIA, Javier, 08225 Terrassa (BARCELONA) (ES); MARTINEZ NAVAS, Sergio, 08225 Terrassa (BARCELONA) (ES)
(74) Representative: Pons

(57) **Abstract**

Optoelectronic device comprising a housing (20), having an entrance opening (6), a detection zone (5) and an evacuating (7) opening; at least one light source (1), for generating a light beam to irradiate a stream of fluid in the detection zone (5), generating a beam of reflected light or photoluminescence light; at least two photodetectors (2, 13), a reference photodetector (2) for receiving the light beam generated by the light source (1) in a transmission mode, and a first analysis photodetector (13) for receiving the beam of reflected light in a reflection mode, the photodetectors (2, 13) generating an electric signal associated with the optical characteristics of the light beam received; a processing module, for analyzing the electric signals generated; and a communication module to connect the photodetectors (2, 13) to the processing module.

## Description

### OBJECT OF THE INVENTION

The present invention is related to the field of optoelectronic devices, more specifically, devices for carrying out a spectrometric analysis of a stream of fluid.

An object of the present invention is to provide an optoelectronic device for analyzing a stream of fluid in order to detect and characterize any particle in suspension.

Another object of the present invention is to provide a method for analyzing spectrum signals in an effective way in real time.

### BACKGROUND OF THE INVENTION

Nowadays a fluid analysis is a costly and time-consuming procedure. Normally, it is carried out in a laboratory with a spectrometer, which analyzes a sample of fluid for detecting and classifying the particles suspended on the fluid. Said analysis allows to detect and correctly classify a large amount of types of particles. The equipment used for carrying out a spectrometry analysis is big in dimensions and therefore not portable and it does not allow to carry out a spectrometer analysis of streams of water.

A solution proposed to analyze streams of fluid is to immobilize a particle to be analyzed enough time to get its emission spectrum. This would significantly increase the complexity of the fluidics system, and, even if a spectrum sensor could be used to analyze the streams of fluid, the complexity of the real-time signal processing would be much higher since algorithms for spectrum deconvolution would be needed. Therefore, a fast, and costly, microprocessor with higher power consumption would be necessary.

Also, some solutions proposed are intended to solve the drawback related to the dimension of a state-of-the-art spectrometer. Therefore, a solution proposed is using, for example micro-spectrometers that are based on microelectromechanical systems (MEMS) technology with much reduced size. Nevertheless, the micro-spectrometers do not currently offer high sensitivity for faint fluorescence signals. Therefore, said micro-spectrometer are used in applications where there is no need for high sensitivity.

Furthermore, most of the micro-spectrometers are not to be used with streams of water, wherein the passing speed of the particles prevents said micro-spectrometers from being used because they usually need a high integration time to detect the fluorescence spectrums.

Another solution proposed is using high power diode lasers, as excitation element, relaxing the requirements of the photodetector but their cost is much higher than other light sources, as for example LEDs, and the power consumption is also higher.

### DESCRIPTION OF THE INVENTION

The present invention is directed to an optoelectronic device for analyzing fluids. The device of the invention allowing to carry out a spectral analysis of a stream of fluid, for example, streams of water. The spectral analysis carried out by the device allowing to detect and recognize different particles in suspension in a stream of fluid too.

The device of the invention comprises a housing, wherein a detection zone is defined, at least one light excitation source, a reference photodetector, a processing module and a communication module.

The light source is intended for generating a light beam in order to perform a spectroscopy analysis on the fluid stream, either in a continuous or pulsatile mode. The light source, thus, emitting excitation light according to stimulate the particles in the fluid stream. The light source preferably could be a LED light source, generating either quasi-monochromatic or broadband light. More specifically, the light source could comprise a light blocking filter in order to use only in a specific wavelength range for excitation.

The light beam is directed to a detection zone wherein a dynamically variable sample, including the stream of fluid and potentially the particles in suspension, is irradiated, and, after being reached the sample, pass through said sample and is directed to the reference photodetector.

The reference photodetector is intended for receiving the light beam, that has passed through the sample, and generating an electric signal associated with the optical characteristics of the light beam, in particular, the wavelength and the intensity. Preferably, the reference photodetector comprises a transimpedance amplifier to amplify the signal received in order to make it easier to analyze.

The signal generated by the reference photodetector allows to monitor the performance of the light source, detecting any change in the wavelength of emission and/or the intensity, and to detect the presence of any particle in suspension on the stream of fluid.

The signal generated by the reference photodetector is sent to the processing module, by means of the communication module, which connects the reference photodetector with said processing module. The processing module is configured to carry out a spectral analysis of the signal received.

The communication module could consist of a connection by cable, WIFI, Bluetooth, radio or ethernet, among others.

The spectral analysis carried out by the processing module allows to determine if a particle is present in the detection zone. For that, the light source generates the light beam, which is directed to the reference photodetector passing through the detection zone, wherein a reference stream of fluid is present, generating the reference photodetector a reference signal, which represents the optical characteristics of the light beam passing through said reference fluid.

Then, if a particle (not belonging to the reference fluid) is allocated in the detection zone, the light beam passes through the fluid and the particle, changing, thus, the temporal characteristics of the signal received in the reference photodetector. By comparing the spectral analysis made to the signal of the light beam passing through reference fluid and the signal of the light beam passing through the reference fluid and the particle, the processing unit determines that a particle is present on the detection zone.

Moreover, on having a stream of fluid, the spectral analysis is carried out continuously, analyzing changes in the optical characteristics of the light beam reaching the reference photodetector. Therefore, when a particle passes through the detection zone, the signal generated by the reference photodetector produces a valley, due to the reduction in the intensity of the light beam on passing through the particle and the changing of the wavelength. Then, by counting the number of valleys present in the light spectrum of the light beam the processing unit could determine the number of particles that has passed though the detection zone.

Also, the processing module could calculate the size of the particles passing through the detection zone. For achieving that, the processing module could compute data regarding the fluidical characteristics of the stream, such as the velocity of the flux. Then, the size of the particle is calculated by determining the passing time that a particle is in the detection zone, by means of the spectral analysis, and using the velocity of the flux.

The device of the invention allows to determine not only if a particle has passed through the detection zone, but the type of particle that has passed. For that, the device could comprise a first analysis photodetector intended for receiving the photoluminescence and/or reflected light from the sample when is irradiated. The first analysis photodetector generates a signal associated with the light reflected and sends the signal to the processing module, by using the communication module. Finally, the processing unit analyzes the intensity and wavelength of the light reflected by the sample, in order to determine the nature of particle.

The device also could comprise a lens for collecting the light reflected or emitted by the sample in order to generate an easy detectable beam of reflected or emitted light.

The analysis of the type of particle could be improved by splitting the beam of light reflected or emitted into a plurality of light beams in order to analyze each one independently. In particular, each of the light beams generated having a predetermined range of wavelength.

For achieving that, the device could further comprise at least one beam splitter to split the beam of light reflected in two different split light beams, a first split light beam and a second split light beam, having the first split light beam a wavelength smaller than a predetermined wavelength, and the second split light beam a wavelength greater than the predetermined wavelength.

A second analysis photodetector is provided in order to analyze the split light beams. Therefore, the first split light beam is directed to the first analysis photodetector and the second split light beam is directed to the second analysis photodetector. Finally, each photodetector generates a signal according to the light beam that is reaching and sends that signal to the processing module to be analyzed.

The device of the invention also could comprise two split-beam lenses for collecting the light split by the beam splitter in order to generate a concentrated beam to obtain a stronger signal, having higher intensity, in each photodetector, improving the quality of the analysis performed by the processing module.

The housing of the device is intended to contain at least the light source, the photodetectors, the lenses and the beam splitter. The design and the material, such as polyamide and steel, among others, of the housing are prepared to support higher pressure from the fluid and its surroundings.

On analyzing a stream of fluid, the housing could comprise an entrance opening for collecting the stream of fluid, and an evacuating opening for discharging the stream of fluid. The housing also defines a detection zone wherein the light beam is to pass through the stream of fluid.

The invention also refers to a method for optical analysis of fluids. The method of the invention allows to analyze the presence of particles in a stream of fluid and to classify the particles according to their optical characteristics.

The method comprises the steps of, firstly, providing a set of spectral data, that could be associated with a signal generated by a photodetector receiving a light beam passing through the stream of fluid, and represents the temporal evolution of the optical characteristics of said light beam. The set of spectral data comprising at least two spectral signals. A reference spectral signal being used for determining the presence of particles in a stream of fluid and a first analysis spectral signal being used for identifying the type of particle which is in suspension in the stream of fluid. The spectral signals could be analyzed by using the processing module of the device of the invention.

Then, after the spectral data was provided, the method comprises the step of determining the presence of any particle in suspension on the fluid, passing through a detection zone, by analyzing the reference spectral signal. Said analysis being carried out by reading the reference spectral signal periodically, preferably each 10 µs, and then, setting a reference value, preferably, coincident with the mean value of the instantaneous values of the reference spectral signal. For determining that a particle is in the detection zone while the instantaneous value of the reference spectral signal is smaller than a predefined threshold, regarding the reference value.

Therefore, the presence of particles in the detection zone is determined by registering valleys in the reference signal, being said valleys in the spectrum associated with a change in the intensity of the light beam detected by a reference photodetector. The change in the intensity of the light beam is due to the loss of intensity of the light beam passing through a particle which reflects part of the light beam, remaining just part of the light beam for passing through and reaching the reference photodetector.

When it is determined that a particle is in the detection zone, according to the analysis of the reference spectral signal, the instantaneous values of the first analysis spectral signal are registered.

The first analysis spectral signal is, thus, used for characterizing the particle according to its optical characteristics, for doing that, the registered values of the first analysis spectral signal are analyzed to determine the type of particle. The analysis of the first analysis spectral signal involves carrying out an analysis of the intensity and/or wavelength of a light beam reflected by a particle. A first analysis photodetector receiving the reflected light beam provides an electric signal, which originates the first analysis spectral signal, therefore, comprising data regarding the wavelength and/or intensity of the light beam reflected by the particle.

The type of particle which passes through the detection zone is determined, by using the processing module. Therefore, when the analysis of the reference spectral signal determines that the particle has passed, and is not anymore in the detection zone, the mean value and maximum and minimum values of the second spectral signal could be calculated and, basing in said calculus, the type of particle that has passed is determined. In order to achieve that, the processing module could use a set of rules previously set, which compare the optical characteristics of the first analysis spectral signal with stored signals related to a specific type of particle, which are previously provided.

Finally, the results obtained are reported. The reporting step of the method of the invention could be performed in a periodic mode, reporting the data obtained and calculated in regular intervals, or in an event-based mode, wherein the reporting is made only when a particle is passing though the detection zone.

Characteristics regarding the velocity and position of the particle in the detection zone could be inferred by calculating the passing time. According to the previous steps, it is considered that a particle is in the detection zone while the instantaneous value of the first spectral signal is smaller than the predefined threshold with respect to the mean value of said reference spectral signal, therefore, when the instantaneous value of the reference spectral signal becomes again greater than said threshold, it is determined that the particle has passed, and therefore the passing time could be determined.

Also, the number of particles that has passed though the detection zone in a determined period of time could be determined by counting the number of times that the reference spectral signal decreases below the threshold of the reference value of said reference spectral signal.

Preferably, the step of providing the set of spectral data is carried out by using the optoelectronic device of the invention. Therefore, the spectral signals are generated by the photodetectors of the device.

Firstly, a stream of fluid is captured by using the collecting element of the housing of the device. The stream of fluid passes through the interior of the collecting element, having preferably a tree-like configuration, and converge in a channel wherein the detection zone is defined. Thus, the stream of fluid is addressed so as to reach the detection zone, and then is evacuated. The light source is activated and the generated light beam is lead to traverse the detection zone and reach the reference photodetector, which produces an electric signal, transmitted to the processor originating the reference spectral signal.

The first analysis spectral signal is provided, firstly, collecting the light reflected by a particle in suspension on the stream of fluid passing through the detection zone, by using a lens, thus, obtaining a beam of light reflected. The beam of light reflected is directed to a first analysis photodetector, which produces an electric signal, transmitted to the processor originating the first analysis spectral signal.

Both the reference and the first spectral signal are processed according to the method of analysis explained before.

Preferably, the analysis is made using three or more spectral signals. This feature allows to determine in a better way the type of particle which is passing through the detection zone.

The method comprising three or more spectral signals further comprises the steps of, after being collected the light reflected by the particle, obtaining a reflected light beam, directing said light beam to the beam splitter of the optoelectronic device. The beam splitter is configured to split the light beam producing a first light beam having a wavelength smaller than a predetermined wavelength and a second light beam having a wavelength greater than said predetermined wavelength. The predetermined wavelength depends on the physical configuration of the beam splitter, and therefore it could be selected. Also, beam splitter can be selected to define the reference wavelength properly.

Then, the first generated light beam is addressed to the first analysis photodetector, which produces an electric signal, transmitted to the processor thus originating a first analysis spectral signal. In turn, the second generated light beam is addressed to a second analysis photodetector, which produces an electric signal, transmitted to the processor, thus, originating a second analysis spectral signal.

The method could be reproduced in a similar way having more than one beam splitter and therefore, more than three spectral signals to analyze. Having more spectral signals allows to a better determination of the type of particle passing through the detection zone.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows a schematic view of a preferred embodiment of the optical configuration of the optoelectronic device of the invention.
Figure 2.- Shows a schematic view of a preferred embodiment of the housing of the optoelectronic device of the invention
Figure 3.- Shows a schematic view of a preferred embodiment of the puck of the optoelectronic device of the invention
Figure 4.- Shows a schematic view of a preferred embodiment of the collection element of the housing.
Figure 5.- Shows a schematic view of a preferred embodiment of the optoelectronic device of the invention
Figure 6.- Shows a diagram of a preferred embodiment of the method for optical analysis of the invention

### PREFERRED EMBODIMENT OF THE INVENTION

The optoelectronic device of the invention allows to carry out a spectrometric analysis of a stream of fluids.

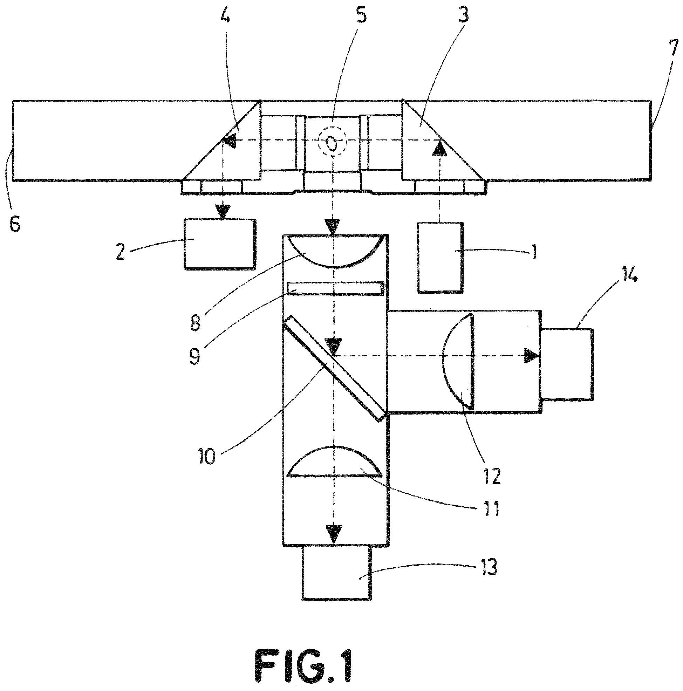

Figure 1 shows a schematic view of the optical configuration of the optoelectronic device of the invention, which comprises a housing (20), an excitation LED (1), a beam splitter (10), three photodetectors (2, 13, 14), three lenses (8, 11, 12), a filter (9) and two mirrors (3, 4) .

The housing (20) is designed to house all the elements of the device, and comprises a passageway, for allowing the liquid stream to pass, and wherein a detection zone (5) is defined. The detection zone (5) is a section of the passageway and comprises the two mirrors (3, 4), in this particular case prisms for reflecting excitation light.

Therefore, the excitation LED (1) emits a light beam which impacts on the first mirror (3), being reflected towards the detection zone (5). After being passed through the detection zone (5) the light beam impacts on the second mirror (4) and is reflected to the reference photodetector (2).

In this particular case, in which the objective is to detect polymeric microparticles in water, the excitation LED (1) is configured to emit only UV light at a maximum wavelength of 370nm, by using a light blocking filter, which prevents the LED to emit at other wavelengths. The UV light excites the polymers so that said polymers have photoluminescence. The reference photodetector (2) is configured to receive light at a maximum wavelength of 395nm, and comprises also a transimpedance amplifier to acquire more easily the signal generated.

The excitation LED (1) is an InGaN transducer configured to emit the light beam either in a continuous or a pulsatile mode.

This assembly allows to monitor the performance of the LED light and to detect any particle passing through the detection zone (5), by registering changes in the spectrum of the light received in the reference photodetector (2).

At the same time, the light beam impacting on a particle in the detection zone (5) is scattered, transmitted, absorbed and re-emitted as a fluorescence at other longer spectral band. The light scattered and re-emitted are collected by using a lens (8), generating a reflected light beam. The reflected light beam is then filtered to reject the contribution of the scattered light and remaining the visible fluorescence, being the filter (9) configured to allow to pass light with wavelength longer than 400 nm.

Then, the light beam filtered is directed to a beam splitter (10), in this case a dichroic mirror, to be split in two split light beams. In this particular case, the beam splitter (10) is positioned at 45° degrees with respect to the incident light beam. Therefore, the light beam is divided in a first split light beam having a wavelength from 400nm to 580nm, and a second split light beam having a wavelength from 625nm to 795nm.

Then, the first split light beam is concentrated by using a first split-beam lens (11) in order to reach the first analysis photodetector (13), and the second light beam is concentrated by using a second split-beam lens (12) in order to reach the second analysis photodetector (14).

The photodiodes (13, 14) allow to determine the type of particle which passes through the detection zone (5), by comparing the spectrum of the light reflected with a theoretical spectrum of the light reflected by a type of material when is irradiated by excitation light. Moreover, the use of two different channels of spectral detection allows to differentiate in a more precise way the type of particle, differentiating easily between two material with similar fluorescence emission characteristics in a minimum of time, having into account that a liquid stream is to be analyzed in real time.

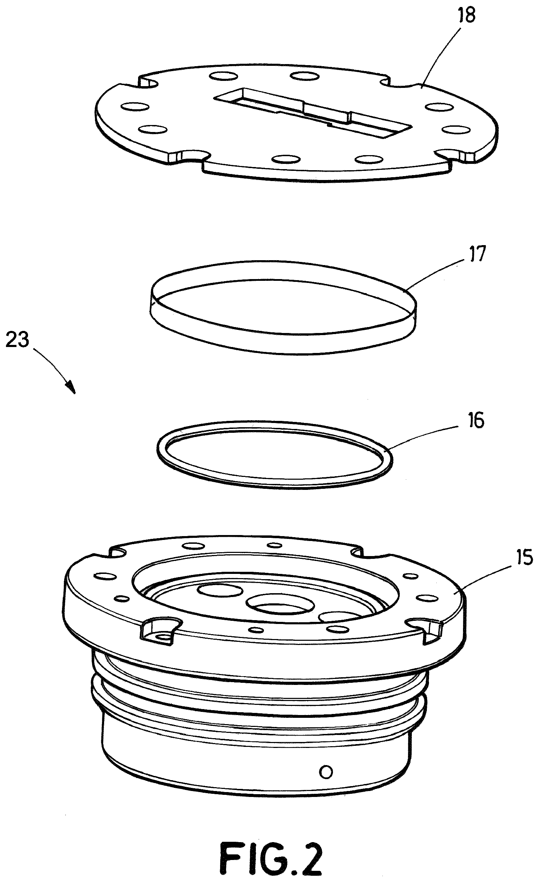

The Figure 2, shows a schematic view of the housing (20) of the device. The housing (20), in this particular case, comprises a casing (19) having a cylindric shape, a puck (23), which is threaded to the upper part of the casing (19), and a collection element (21) connected to the puck. The casing (19) houses the excitation LED (1), the beam splitter (10), the three photodetectors (2, 13, 14), the three lenses (8, 11, 12), the filter (9) and the two mirrors (3, 4), and provides connections for power supply and data transmission.

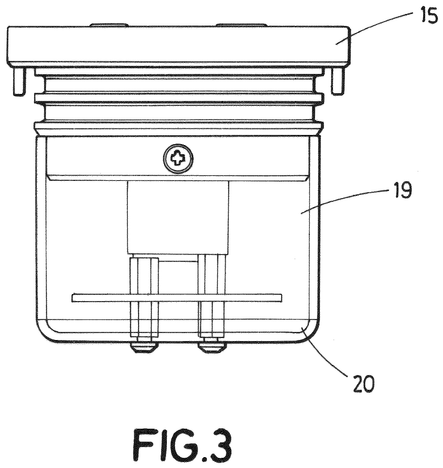

Figure 3 shows an exploded view of the puck (23) of the housing (20). In the embodiment shown in Figures 2 and 3, the two mirrors (3, 4), intended to direct the light beam to the detection zone (5) and then to the reference photodetector (2), and the detection zone (5) are located outside the housing (20). For this reason, the puck (23) is intended to allow the passing of the light beam generated by the excitation LED (1) to the first mirror (3), the passing of the light beam reflected by the second mirror (4) to the reference photodetector (2) and the passing of the light reflected by the stream and particle in the detection zone (5).

Therefore, the puck (23), shown in Figure 3, has a connection element (15), two sealing joints (16), a window (17) and a cover (18). The connection element (15) is configured having a threaded lower end to be thread to the casing (19). In the upper end, an upper edge is defined and a cylindrical hollow to house the window (17), being the two sealing joints (16), O-rings in this case, located behind and above the window (17), respectively. The cover (18) is located above the window (17), and the sealing joints (16), and is joint with the upper edge of the connection element (15).

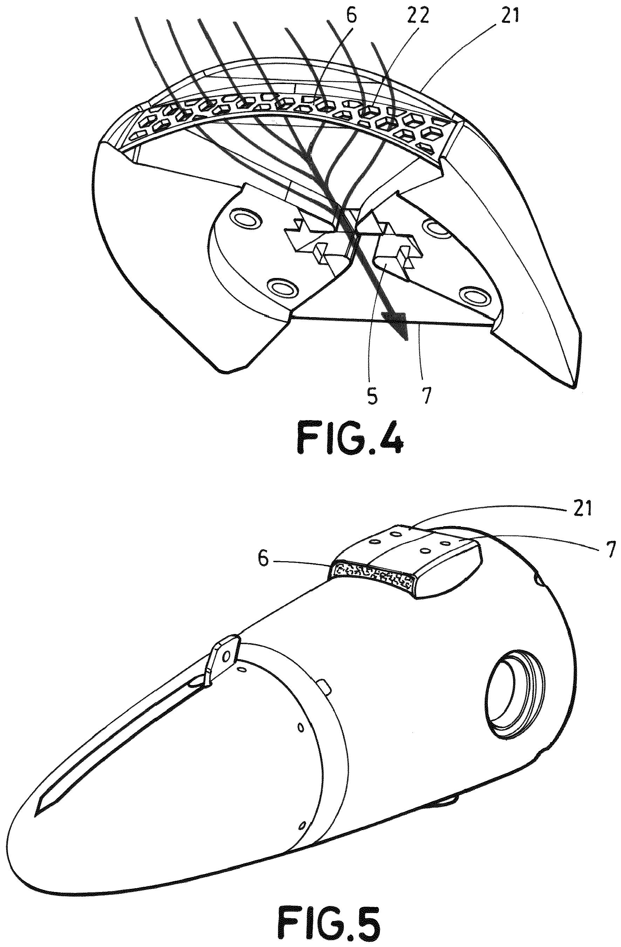

Figure 4 shows a schematic view of the collection element (21) of the housing (20), which is intended to receive a liquid stream by means of an entrance opening (6), and to direct said stream to a passageway in which the detection zone (5) is defined, then, the liquid stream is evacuated by using an evacuating (7)opening.

The entrance opening (6) of the collection element (21) is configured as a plurality of hexagonal holes (22), having each hole a duct that connects with the passageway, thus forming a tree-like configuration, which connect with the passageway and defines de detection zone (5).

Figure 5 shows a schematic view of a glider having the device of the invention mounted. The casing (19); containing the excitation LED (1), the beam splitter (10), the three photodetectors (2, 13, 14), the three lenses (8, 11, 12), the filter (9) and the two mirrors (3, 4); and the puck (23) are allocated in a hole of the glider, in the front part. The collection element (21), in turn, protrudes outside the perimeter of the glider, collecting the fluid which is flowing on the surface of the glider.

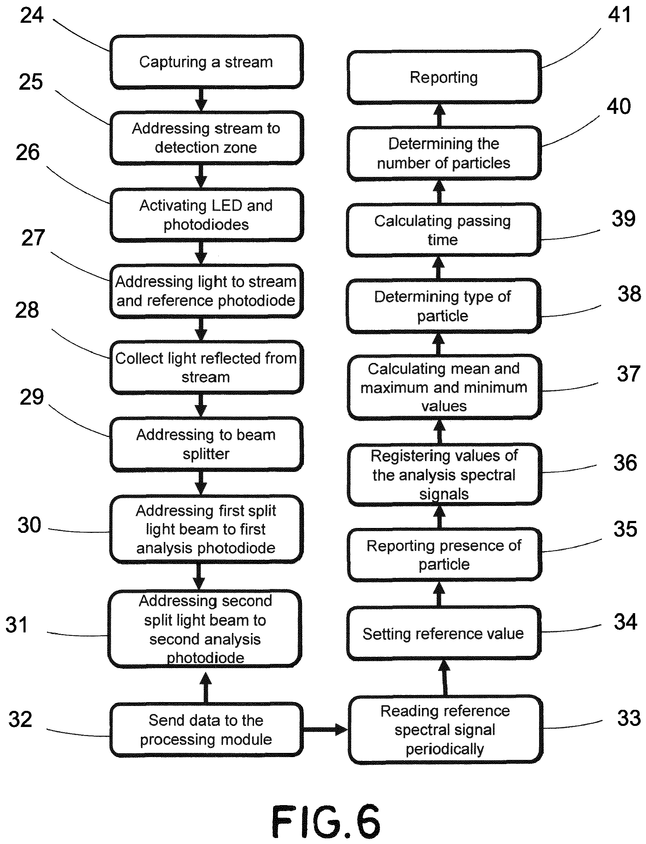

Figure 6 shows a diagram including the steps of the method for optical analysis of the invention, wherein the liquid stream is captured (24) by using the entrance opening (6) of the housing (20). The stream then, is addressed (25) to the detection zone for being analyzed.

The excitation LED (1) and the photodiodes (2, 13, 14) are activated (26) and the beam of light is addressed (28)(27) to the stream, and after passing though said stream, reaches the reference photodetector (2).

The light reflected by the stream and a particle passing through the detection zone (5) is collected (28) by using the lens (8) and addressed (29) to the beam splitter (10) to produce a first split light beam having a wavelength smaller than a predetermined wavelength, and a second split light beam having a wavelength greater than said predetermined wavelength. The first light beam is directed (30) to the first analysis photodetector (13) and the second light beam is directed (31) to the second analysis photodetector (14).

The photodiodes (2, 13, 14) emit a signal associated with the optical characteristics of the light beam received.

All the signals generated are sent (32) to the processing module, as a spectral signal, to be analyzed, forming a set of spectral data. Then, it is determined if any particle is in the detection zone (5). For doing that, the reference spectral signal, corresponding to the signal of the reference photodetector (2), is read (33) periodically each 10 µs, then, a reference value is set (34), being the mean value of the reference spectral signal, and the presence of any particle in the detection zone is reported (35) when the instantaneous value of the reference spectral signal is smaller than the twenty percent of the reference value.

During the time that the particle is in the detection zone (5), the values of the first and second analysis spectral signals are registered (36) to determine the type of particle.

When the particle has passed, the mean value and maximum and minimum values of the first and second analysis spectral signals are calculated (37), and is determined (38) if the particle is a microplastic according to the following rules.

Is a microplastic if the signal of the first analysis spectral signal is greater than the 10 percent of the reference value, coincident with the mean value of the reference spectral signal, is greater than 5mV and is greater than the value of the second analysis spectral signal.

Then, the passing time is calculated (39), when the particle has passed through the detection zone (5), by determining the time wherein the instantaneous value of the reference spectral signal is smaller than a 20 percent of the reference value. Being calculated the passing time it is inferred the velocity and position of the particle as a function of the time, characterizing also the size of the particle.

The number of particles that has passed in a period of time is calculated (40) by counting the number of times that the reference spectral signal becomes smaller than the 20 percent of the reference value.

All the results are reported (41) to be accessible to a user, in an event-based mode, that means, when a particle is detected in the detection zone (5), and the calculus explained above are done.

## Claims

1. Optoelectronic device for fluidic analysis **characterized in that** comprises:
- a housing (20), having an entrance opening (6), for collecting fluid, a detection zone (5) and an evacuating (7) opening, for discharging the fluid collected;
- at least one light source (1), intended for generating a light beam to irradiate a stream of fluid in the detection zone (5), generating a beam of reflected light and/or photoluminescence light;
- at least two photodetectors (2, 13), a reference photodetector (2) for receiving the light beam generated by the light source (1) in a transmission mode, and a first analysis photodetector (13) for receiving the beam of reflected light in a reflection mode, the photodetectors (2, 13) generating an electric signal associated with the optical characteristics of the light beam received;
- a processing module, for analyzing the electric signals generated by the photodetectors (2, 13); and
- a communication module, intended to connect the photodetectors (2, 13) to the processing module,
wherein the housing (20) houses the at least one light source (1) and the at least two photodetectors (2, 13).

2. Optoelectronic device according to claim 1, further comprising at least one mirror (3, 4), for reflecting the light beam in order to change the direction of propagation to direct the light beam to the reference photodetector (2).

3. Optoelectronic device according to claim 1, further comprising a set of lenses (8, 11, 12) to collect reflected light, generating a concentrated light beam.

4. Optoelectronic device according to claim 1, wherein the housing (20) comprises:
- a casing (19) having a cylindric shape, defining and upper part;
- a puck (23), comprising a connection element (15) threaded to the upper part of the casing (19), a window (17) intended to allow the light to pass, and a cover (18) to fix the window to the connection element (15); and
- a collection element (21), wherein the entrance opening (6), and the evacuating (7) opening are defined.

5. Optoelectronic device according to claim 1, wherein the entrance opening (6) of the collection element (21) is configured in a tree-like configuration, having a plurality of ducts converging in a passageway wherein the detection zone (5) is defined.

6. Optoelectronic device according to claim 1, wherein the light source (1) is an ultraviolet LED.

7. Optoelectronic device according to claim 1, further comprising:
- at least a beam splitter (10) for dividing the beam of light reflected, thus, forming a first split light beam, having a wavelength smaller than a predetermined wavelength, and a second split light beam, having a wavelength greater than the predetermined wavelength; and
- a second analysis photodetector (14) generating an electric signal associated with the optical characteristics of the light beam received,
wherein the first split light beam is addressed to the first analysis photodetector (13) and the second split light beam is addressed to the second analysis photodetector (14).

8. Method for optical analysis of fluids comprising the steps of:
- providing a set of spectral data, comprising at least two spectral signals, a reference spectral signal and a first analysis spectral signal;
- determining that a particle is in a detection zone (5), by analyzing the reference spectral signal;
- registering (36) values of the first analysis spectral signal, while the particle is in the detection zone (5), to determine the type of particle passing through said detection zone (5);
- calculating (37) the mean value and maximum and minimum values of the first analysis spectral signal;
- determining (38) the type of particle by comparing the values calculated from the first analysis spectral signal with prestored data.
- reporting (41) the values calculated and the results of the determination step.

9. Method according to claim 8, using an optoelectronic device according to any of claims 1-6, wherein the step of providing a set of spectral data comprises the steps of:
- capturing (24) a stream of fluid for analyzing, by means of the entrance opening (6) of the housing (20);
- addressing (25) the stream so as to reach a detection zone (5);
- activating (26) the light source (1) for generating a light beam;
- addressing (28)(27) the light beam generated to a reference photodetector (2), passing through the stream;
- collecting (28) the light reflected by the stream and any particle in suspension, by using a lens (8) obtaining a beam of light reflected;
- addressing (30) the beam of light reflected to the first analysis photodetector (13) in order to produce an electric signal associated with the optical characteristics of the reflected light beam;
- sending (32) the electric signal associated with the light beam to the processing module, by means of the communication module.

10. Method according to claim 8, using an optoelectronic device according to claim 7, further comprising the steps of:
- capturing (24) a stream of fluid for analyzing, by means of the entrance opening (6) of the housing (20);
- addressing (25) the stream so as to reach a detection zone (5);
- activating (26) the light source (1) for generating a light beam;
- addressing (28)(27) the light beam generated to a reference photodetector (2), passing through the stream;
- collecting (28) the light reflected by the stream and any particle in suspension, by using a lens (8) obtaining a beam of light reflected;
- addressing (29) the beam of light reflected to the beam splitter (10) to produce a first split light beam having a wavelength smaller than a predetermined wavelength, and a second split light beam having a wavelength greater than said predetermined wavelength;
- addressing (30) the first split light beam produced to the first analysis photodetector (13) in order to produce an electric signal associated with the optical characteristics of the first split light beam;
- addressing (31) the second split light beam produced to the second analysis photodetector (14) in order to produce an electric signal associated with the optical characteristics of the second split light beam;
- sending (32) the electric signal associated with the first and the second split light beams to the processing module, by means of the communication module.

11. Method according to claim 8, wherein the step of determining the presence of any particle in suspension on the stream of fluid, by analyzing the reference spectral signal is carried out by following the steps of:
- reading (33) the reference spectral signal periodically,
- setting (34) a predefined threshold relative to a reference value coincident with the mean value of the instantaneous values of the reference spectral signal,
- reporting (35) the presence of a particle in the detection zone (5) while the instantaneous value of the reference spectral signal is smaller than the predefined threshold.

12. Method according to claim 11, wherein the step of reading (33) the reference spectral signal is carried out every 10 ps.

13. Method according to claim 8, further comprising a step of calculating (39) the passing time when the particle has passed.

14. Method according to claim 8, further comprising a step of determining (40) the number of particles passing through the detection zone (5) by counting the number of times that the first spectral signal decreases below the predefined threshold of the mean value of said first spectral signal.

15. Method according to claim 8, wherein the step of reporting (41) is carried out either periodically or in an event-based mode.
